# EUROPÄISCHE PATENTANMELDUNG

(11) **EP 2 388 157 A1**
(43) Veröffentlichungstag der Anmeldung: **23.11.2011**
(21) Anmeldenummer: 11401066.3
(22) Anmeldetag: 26.04.2011
(51) Int. Cl.: B60G 3/14, B60G 5/04

(54) **Fahrwerk für selbstfahrende Verteilmaschine**

(30) Priorität: 28.04.2010 DE 102010016665
(71) Anmelder: Amazonen-Werke H. Dreyer GmbH & Co. KG, 49205 Hasbergen (DE)
(72) Erfinder: Ehlen, Volker, 49205, Hasbergen (DE); Voth, Robert, 49163, Bohmte (DE)

(57) **Zusammenfassung**

Fahrwerk für selbstfahrende landwirtschaftliche Verteilmaschine, insbesondere Pflanzenschutzspritze mit Laufrädern (11) und einem Tragrahmen (1), an welchem auf jeder Seite des Tragrahmens mittels einer zentralen Gelenkanordnung (2) ein nach vorn ragender Längslenker (3), der an seinem vorderen freien Ende zumindest ein Laufrad aufweist, und ein mit dem vorderen Längslenker verbundener und nach hinten ragender Längslenker (4), der an seinem hinteren freien Ende zumindest ein Laufrad aufweist, angeordnet ist, wobei die Längslenker in aufrechte Ebene bewegbar angeordnet sind. Um mit einfachen Mitteln ein vereinfachtes Längslenker aufweisendes Fahrwerk zu schaffen, ist vorgesehen, dass das hintere Ende (12) des vorderen Längslenkers über die zentrale Gelenkanordnung hinaus ragt, dass an dem über die zentrale Gelenkanordnung hinausragenden Ende des vorderen Längslenkers das vordere Ende des hinteren Längslenkers mittels eines Gelenkelementes (13) verschwenkbar gegenüber dem vorderen Längslenkers angeordnet ist.

## Beschreibung

Eine derartige als Pflanzenschutzspritze ausgebildete selbstfahrende Verteilmaschine ist durch die DE 698 17 509 T2 bekannt. Dieses Pflanzenschutzspritze weist ein Fahrwerk auf. Dieses Fahrwerk trägt u.a. und einen Rahmen mit Fahrerkabine, Pflanzenschutztank, Antriebsmotor und Verteilergestänge. Das Fahrwerk weist auf jeder Seite des Tragrahmens jeweils mit einer zentralen Gelenkanordnung am Rahmen befestigte mittig gelagerte Längslenker auf. An jedem Ende des Längslenkers ist ein Laufrad, welche motorisch angetrieben sind, angeordnet. Zwischen den freien Enden der Längslenker und dem Rahmen sind Feder- und Dämpfungselemente angeordnet. Die jeweils ein vorderes und ein hinteres Laufrad tragende Längslenker sind als starre Elemente ausgebildet. Dies bedeutet, dass aufgrund von Bodenunebenheiten, wenn ein Laufrad ausgelenkt wird, sich der gesamte Längslenker bewegt. Hierdurch kann sich ein Störverhalten bei dem anderen an dem Längslenker angelenkten Laufrad ergeben. Außerdem muss durch eine derartige Ausgestaltung des Längslenkers bei der Auslenkung der Laufräder eine große Masse bewegt werden, welches zu einem negativen Schwingungsverhalten des Fahrwerkes unter ungünstigen Bedingungen führen kann.

Der Erfindung liegt die Aufgabe zu Grunde, mit einfachen Mitteln ein vereinfachtes Längslenker aufweisendes Fahrwerk zu schaffen.

Diese Aufgabe wird erfindungsgemäß dadurch gelöst, dass das hintere Ende des vorderen Längslenkers über die zentrale Gelenkanordnung hinaus ragt, dass an dem über die zentrale Gelenkanordnung hinausragenden Ende des vorderen Längslenkers das vordere Ende des hinteren Längslenkers mittels eines Gelenkelementes verschwenkbar gegenüber dem vorderen Längslenkers angeordnet ist. Infolge dieser Maßnahmen werden verkürzte Längslenker eingesetzt, wobei der hintere Längslenker in der Nähe der zentralen Gelenkanordnung an dem vorderen Längslenker angelenkt ist. Hierdurch wird quasi eine einfache Einzelradaufhängung für jedes Laufrad mit einer fast zentralen Gelenkanordnung geschaffen. Die Anlenkung der einzelnen Längslenker ist sehr einfach. Auch kann eine gute Federmöglichkeit für jedes Laufrad geschaffen werden.

Eine einfache Ausgestaltung der zentralen Gelenkanordnung zur Anlenkung der Längslenker lässt sich dadurch verwirklichen, dass die zentrale Gelenkanordnung für die vorderen Längslenkers eine quer zur Fahrtrichtung verlaufende Zentralwelle, die mit ihren Endbereichen jeweils an den Tragrahmen befestigt ist, aufweist, dass die vorderen Längslenker auf der Zentralwelle verschwenkbar gelagert sind.

Um in einfacher Weise eine Spurverstellung zur Einstellung unterschiedlicher Spurweiten zu realisieren, ist vorgesehen, dass die vorderen Längslenker auf der Zentralwelle in Längsrichtung der Zentralwelle verschiebbar angeordnet sind.

Um unterschiedliche Spurweiten in einfacher Weise einstellen zu können, ist vorgesehen, dass den Längslenkern zum Verschieben auf der Zentralwelle motorische Verstellelemente zugeordnet sind.

Eine einfache Ausgestaltung eines gefederten Fahrwerkes lässt sich dadurch verwirklichen, dass zwischen dem Tragrahmen und dem vorderen und hinteren Längslenkern Feder- und/oder Dämpfungselemente angeordnet sind, dass die Feder- und/oder Dämpfungselemente im Bereich der freien Enden der Längslenker an diesen angreifen.

Eine einfache Anlenkung des hinteren Längslenkers an dem vorderen Längslenker mit einem guten Schwingungsverhalten lässt sich dadurch erreichen, dass die Gelenkelemente zur Anordnung der hinteren Längslenker an den vorderen Längslenkern sich in unmittelbarer Nähe der Zentralwelle befinden.

Um in einfacher Weise einen unterschiedlichen Abstand des Rahmens zu Boden einstellen zu können, ist vorgesehen, dass die Feder- und/oder Dämpfungselemente in motorischer Weise längenverstellbar sind.

Um in einfacher Weise das Feder- und Dämpfungsverhalten des Fahrwerkes an unterschiedliche Einsatzbedingungen anpassen zu können, ist vorgesehen, dass der Hubweg der Feder- und/oder Dämpfungselemente mittels motorischer Mittel veränderbar ist.

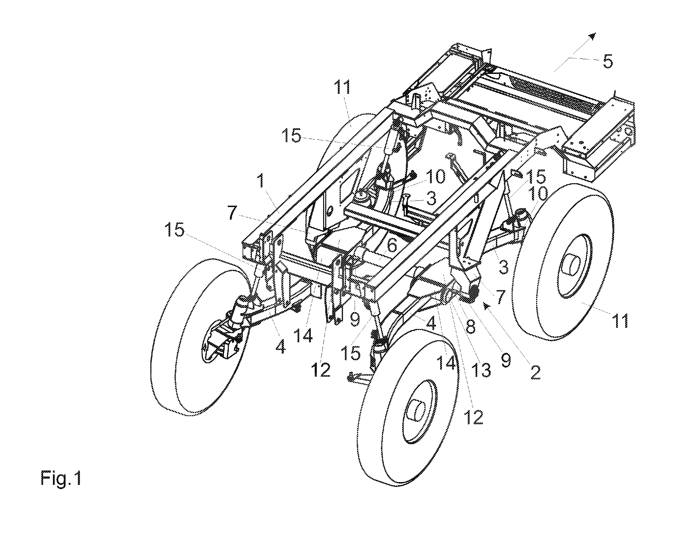

Weitere Einzelheiten der Erfindung sind der Beispielsbeschreibung und den Zeichnungen zu entnehmen. Hierbei zeigen
- Fig. 1: das Fahrwerk der landwirtschaftlichen Maschine in perspektivischer Darstellung und

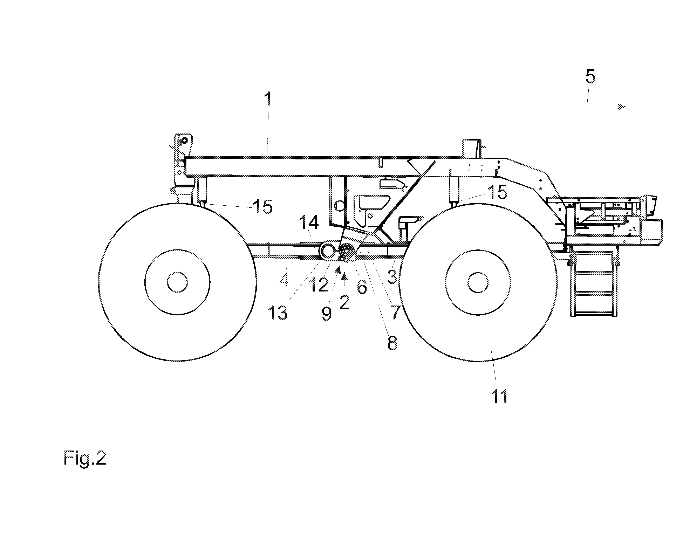

- Fig.2: das Fahrwerk gemäß Fig. 1 in Seitenansicht.

Das Fahrwerk für eine selbstfahrende landwirtschaftliche Verteilmaschine, die als selbstfahrende Pflanzenschutzspritze ausgebildet ist, weist einen Tragrahmen 1 auf, an welchen auf jeder Seite des Tragrahmens 1 mittels einer zentralen Gelenkanordnung 2 Längsträger 3,4 angeordnet sind. Zur Anlenkung der Längsträger 3, 4 weist die zentrale These Gelenkanordnung 2 die quer zur Fahrtrichtung 5 verlaufende Zentralwelle 6 auf. Die Endbereiche der Zentralwelle 6 ist mittels der Zwischenhalterungen 7 an dem Tragrahmen 1 befestigt. An der Zentralwelle 6 sind die vorderen Längsträger 3 mit ihren hinteren Endbereichen 8 mittels eines Gelenkes 9 angelenkt. An dem vorderen freien Ende 10 jedes vorderen Längsträgers 3 ist ein Laufrad 11 angeordnet. Das hintere Ende 12 des jeweiligen vorderen Längslenkers 3 ragt über die Zentralwelle der zentralen Gelenksanordnung hinaus. An diesem über die Zentralwelle 6 hinausragenden Ende 12 des vorderen Längsträgers 3 ist ein Gelenkelement 13 angeordnet, mit dem das vordere Ende 14 des jeweiligen hinteren Längsträgers 4 an dem jeweiligen vorderen Längsträger 3 angeordnet und gegenüber diesem verschwenkbar ist. Die Gelenkelemente 13 zur Anordnung der hinteren Längslenker 4 an den vorderen Längslenkern 3 befinden sich in unmittelbarer Nähe der Zentralwelle 6.

Das Gelenk 9, mit dem der jeweilige vordere Längsträger 3 auf der Zentralwelle 6 gelagert ist, ist derart ausgestaltet, dass der vordere Längsträger 3 mit dem hinteren Längsträger 4in Längsrichtung der Zentralwelle 6 verschiebbar angeordnet ist. Um die Längslenker 3, 4 auf der Zentralwelle 6 zu verschieben und in der jeweils eingestellten Position festzusetzen, sind zwischen dem vorderen Längslenker 3 und dem Tragrahmen 1 bzw. der Zentralwelle 6 motorische Verstellelemente, die beispielsweise als Hydraulikzylinder ausgebildet sein können, angeordnet.

Zwischen dem Tragrahmen 1 und den jeweiligen vorderen und hinteren Längslenkern 3, 4 sind Feder- und/oder Dämpfungselemente 15 angeordnet. Hierbei sind die Federunter/oder Dämpfungselemente 15 im Bereich der freien Enden der jeweiligen Längsträger 3, 4 an diesen angreifend angeordnet. Die Feder- und/oder Dämpfungselemente 15 sind in motorischer Weise längenverstellbar, um eine Veränderung des Bodenabstandes des Tragrahmens 1 oder eine Veränderung des Dämpfungs- und Federungshaltens der Elemente 15 herbeiführen zu können. Weiterhin lässt sich hierdurch der Hubweg der Feder- und/oder Dämpfungselemente mittels der motorischen Mittel verändern.

## Patentansprüche

1. Fahrwerk für selbstfahrende landwirtschaftliche Verteilmaschine, insbesondere Pflanzenschutzspritze mit Laufrädern und einem Tragrahmen, an welchem auf jeder Seite des Tragrahmens mittels einer zentralen Gelenkanordnung ein nach vorn ragender Längslenker, der an seinem vorderen freien Ende zumindest ein Laufrad aufweist, und ein mit dem vorderen Längslenker verbundener und nach hinten ragender Längslenker, der an seinem hinteren freien Ende zumindest ein Laufrad aufweist, angeordnet ist, wobei die Längslenker in aufrechte Ebene bewegbar angeordnet sind, **dadurch gekennzeichnet, dass** das hintere Ende (12) des vorderen Längslenkers (3) über die zentrale Gelenkanordnung (2) hinaus ragt, dass an dem über die zentrale Gelenkanordnung (2) hinausragenden Ende (12) des vorderen Längslenkers (3) das vordere Ende (14) des hinteren Längslenkers (4) mittels eines Gelenkelementes (13) verschwenkbar gegenüber dem vorderen Längslenkers (3) angeordnet ist.

2. Fahrwerk nach Anspruch 1, **dadurch gekennzeichnet, dass** die zentrale Gelenkanordnung (2) für die vorderen Längslenker(3) eine quer zur Fahrtrichtung (5) verlaufende Zentralwelle (6), die mit ihren Endbereichen jeweils an den Tragrahmen (1) befestigt ist, aufweist, dass die vorderen Längslenker (3) auf der Zentralwelle (6) verschwenkbar gelagert sind.

3. Fahrwerk nach zumindest einem der vorstehenden Ansprüche, **dadurch gekennzeichnet, dass** die vorderen Längslenker (3) auf der Zentralwelle (6) in Längsrichtung der Zentralwelle (6) verschiebbar angeordnet sind.

4. Fahrwerk nach zumindest einem der vorstehenden Ansprüche, **dadurch gekennzeichnet, dass** den Längslenkern (3, 4) zum Verschieben auf der Zentralwelle (6) motorische Verstellelemente zugeordnet sind.

5. Fahrwerk nach zumindest einem der vorstehenden Ansprüche, **dadurch gekennzeichnet, dass** zwischen dem Tragrahmen (1) und dem vorderen und hinteren Längslenkern (3, 4) Feder- und/oder Dämpfungselemente (15) angeordnet sind, dass die Feder- und/oder Dämpfungselemente (15) im Bereich der freien Enden der Längslenker (3, 4) an diesen angreifen.

6. Fahrwerk nach zumindest einem der vorstehenden Ansprüche, **dadurch gekennzeichnet, dass** die Gelenkelemente (13) zur Anordnung der hinteren Längslenker (4) an dem vorderen Längslenkern (3) sich in unmittelbarer Nähe der Zentralwelle (6) befinden.

7. Fahrwerk nach zumindest einem der vorstehenden Ansprüche, **dadurch gekennzeichnet, dass** die Feder- und/oder Dämpfungselemente (15) in motorischer Weise längenverstellbar sind.

8. Fahrwerk nach zumindest einem der vorstehenden Ansprüche, **dadurch gekennzeichnet, dass** der Hubweg der Feder- und/oder Dämpfungselemente (15) mittels motorischer Mittel veränderbar ist.
